# EUROPEAN PATENT APPLICATION

(11) **EP 1 721 738 A1**
(43) Date of publication of application: **15.11.2006**
(21) Application number: 05719771.7
(22) Date of filing: 02.03.2005
(51) Int. Cl.: B32B 27/30, C03C 27/12

(54) **MULTILAYER RESIN FILM AND LAMINATED GLASS**

(30) Priority: 02.03.2004 JP 2004058251; 29.09.2004 JP 2004284583
(71) Applicant: MITSUBISHI PLASTICS INC., Chiyoda-ku, Tokyo 100-0005 (JP)
(72) Inventor: HASEGAWA, Asahito c/o NAGAHAMA PLANT, Nagahama-shi, Shiga 5268660 (JP); NAKANISHI, Yasuhiko c/o NAGAHAMA PLANT, Nagahama-shi, Shiga 5268660 (JP); MURAKAMI, Hiroyasu c/o NAGAHAMA PLANT, Nagahama-shi, Shiga 5268660 (JP)
(74) Representative: Sherrard-Smith, Hugh
(86) International application number: PCT/JP2005/003456
(87) International publication number: WO 2005/082617

(57) **Abstract**

A laminated glass (14) has a laminated resin film (11) and two glass plates (16) laminated on both sides of the laminated resin film (11). The laminated resin film (11) is composed of at least one polyvinyl butyral film (13) and at least one fluorine resin film (12) which are laminated. A laminated glass (111) is composed of at least two non-tempered glass plates (113) and at least one resin interlayer film (112) which are bonded. At least one of the glass plates (113) is a non-tempered borosilicate glass plate.

## Description

### Technical Field

The present invention relates to a laminated glass excellent in fire resistance and crime prevention properties, and to a laminated resin film used therefor.

### Background Art

Recently, the number of victims of burglary is increasing. Nearly 60% of burglars break into houses by breaking glass, more specifically, door glass or window glass. Such burglars take only several tens of seconds to break normal single glass or wire glass. Thus, even if glass makes noise upon break, burglars can break into a house without being seen by someone. Some report shows that nearly 70% of burglars give up breaking into houses if it takes 5 minutes or more to break the glass. Accordingly, glass with high crime prevention properties means glass which is highly resistant to penetration, namely, through which a hole can be hardly made.

Laminated glass comprising two glass plates and a resin film such as a polyvinyl butyral film provided between the glass plates is known as security glass or safety glass. Also, Patent Document 1 proposes a glass laminate comprising two glass plates and an interlayer film provided between the glass plates, which is composed of a first adhesive resin layer containing polyvinyl butyral resin as a main component and a second adhesive resin layer containing an ethylene-vinyl acetate copolymer as a main component.

Patent Document 2 proposes a fire resistant glass comprising two glass plates and a fluorine resin film provided between the glass plates. Due to the presence of a fluorine resin film between the glass plates with an adhesive layer in between, the fire resistant glass is difficult to break when something collides against the glass, and even if the glass is broken, flying of fragments of glass can be prevented. Accordingly, this glass also serves as safety glass.

Patent Document 3 proposes a laminated glass sheet assembly having fire resistance. The laminated glass sheet assembly contains a heat resistant glass-ceramic sheet having a light-diffusing rough surface. A silicate glass sheet is bonded to each side of the glass-ceramic sheet with a transparent intermediate layer in between. The transparent intermediate layer is composed of a thermoplastic polymer and has an action of preventing flying of fragments produced when the glass sheet is broken (splinter fixation effect). Patent Document 3 describes that the transparent intermediate layer can be composed of a single material or a plurality of materials and that the transparent intermediate layer composed of fluorinated hydrocarbon (THV) has an advantage in that it is not easily burned.

However, since polyvinyl butyral films used for conventional security glass are flammable, glass plates themselves must have fire resistance in order to provide security glass with fire resistance, and so fire resistance cannot be achieved in laminated glass using a general glass plate. On the other hand, laminated glass in which a fluorine resin film is used is excellent in fire resistance and is hardly broken when something collides against the glass and also serves as safety glass which prevents fragments of glass from flying even if the glass is broken. However, such a fluorine resin film has lower strength than a polyvinyl butyral film, and therefore, to ensure crime prevention properties against burglars, i.e., strength against impact forcibly given to break the glass, the fluorine resin film must have a greater thickness, and thus the entire laminated glass becomes thick. Since fluorine resins are more expensive than polyvinyl butyral, the thicker the resin film, the higher the production cost. For these reasons, security glass and fire resistant glass have been considered completely different. Moreover, use of flammable resin film for laminated glass intended for fire resistant purposes has not been explored.

Accordingly, a first object of the present invention is to provide a laminated resin film which can be suitably used as an interlayer film of a laminated glass having both good fire resistance and crime prevention properties, and a laminated glass comprising such a laminated resin film.

Wire glass plates, heat resistant crystallized glass plates, super-tempered glass plates and the like have been conventionally known as fire resistant glass plates which prevent spread of fire in a fire disaster. Recently, demand has risen that windows or the like in which a fire resistant glass plate has been used have crime prevention properties. However, single fire resistant glass plates have low impact resistance and therefore have low safety and poor crime prevention properties.

Laminated glass using the above fire resistant glass plate is known as glass having high safety in addition to fire resistance. For example. Patent Document 4 discloses a laminated glass formed by bonding a heat resistant crystallized glass plate and an interlayer film of a fluorine resin containing a chain molecular structure alone.

Patent Document 5 discloses a fire resistant security glass in which no resin interlayer film is used. In the fire resistant security glass, a plurality of glass plates are bonded with each other using frit with a metal thin film having a through-part being interposed between the glass plates.

Patent Document 6 discloses a laminated glass having impact resistance and penetration resistance which can stand intruders' breaking or picking to deal with recent deterioration in security. In this laminated glass, the thickness of a resin interlayer film such as a polyvinyl butyral film or a polyethylene vinyl acetate film is increased in order to improve impact resistance and penetration resistance.

The laminated glass described in Patent Document 4 uses a wire glass plate, a heat resistant crystallized glass plate or a super-tempered glass plate as a glass plate. However, such a wire glass plate or a super-tempered glass plate cannot be cut into a desired size in working sites. Therefore, the cost is increased because of poor yield. Further, since heat resistant crystallized glass plates are expensive, the cost is further increased.

The fire resistant security glass described in Patent Document 5 has a problem of poor appearance as the glass contains a metal thin film.

Although the laminated glass described in Patent Document 6 is excellent in crime prevention properties, the glass has a problem of inferior fire resistance because the resin interlayer film is flammable.

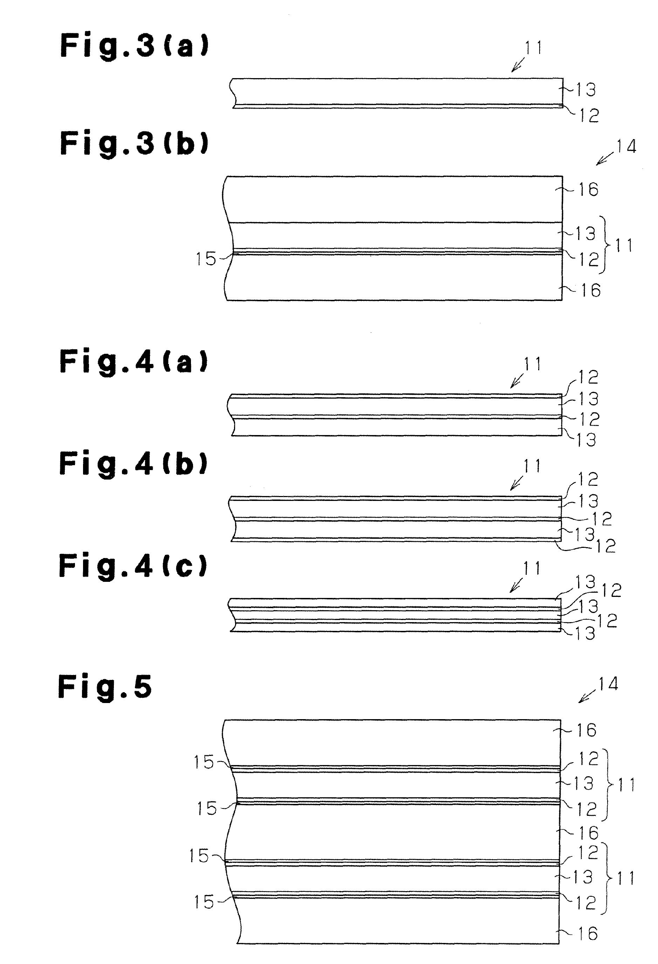

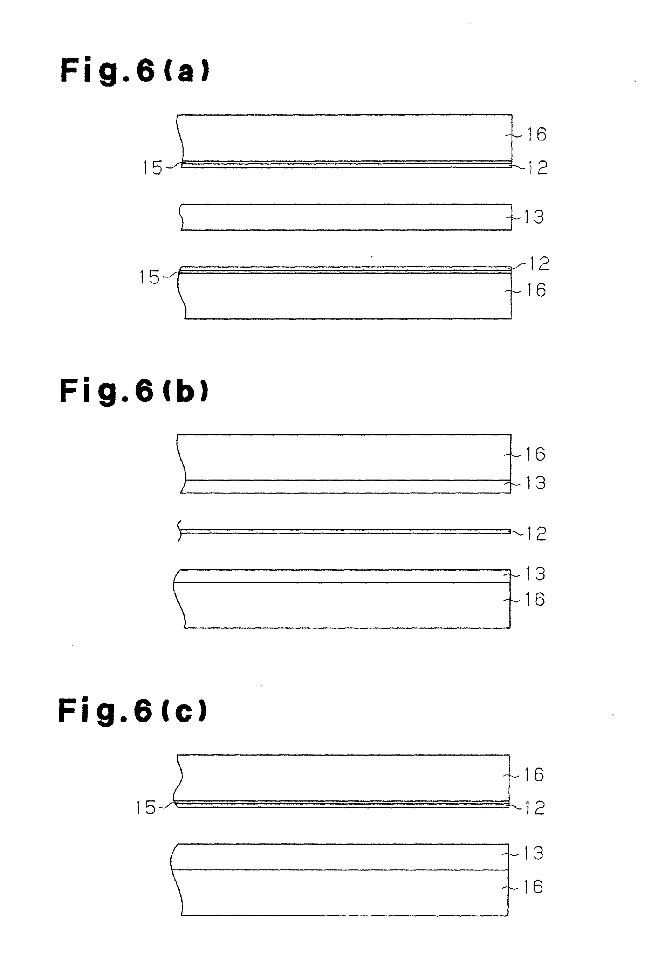

Accordingly, a second object of the present invention is to provide a laminated glass having both good fire resistance and crime prevention properties, easy to cut and excellent in appearance.
Patent Document 1: Japanese Laid-Open Patent Publication No. 2004-50750 (paragraphs [0002] and [0005] to [0008] of the specification, and Fig. 1)
Patent Document 2: Japanese Laid-Open Patent Publication No. 2002-293585 (paragraphs [0008] and [0029] of the specification, and Fig. 1)
Patent Document 3: Japanese Laid-Open Patent Publication No. 11-92183 (paragraphs [0008] and [0013] of the specification)
Patent Document 4: Japanese Laid-Open Patent Publication No. 4-224938 (paragraphs [0007], [0008], [0017] and [0018] of the specification, and Figs. 5 and 6)
Patent Document 5: Japanese Laid-Open Patent Publication No. 8-91882 (paragraphs [0011] and [0025] of the specification, and Fig, 1)
Patent Document 6: Japanese Laid-Open Patent Publication No. 2002-12457 (paragraphs [0010] and [0027] of the specification, and Fig. 2)

### Disclosure of the Invention

The present inventors have conducted studies without influence of the conventional idea that a flammable resin is not used as a resin film (interlayer film) for laminated glass excellent in fire resistance, and as a result have found that a laminated glass having good fire resistance can be obtained even by partly using a flammable resin, and the present invention has been completed.

To achieve the first object of the present invention, the present invention provides a laminated resin film comprising at least one polyvinyl butyral film and at least one fluorine resin film which are laminated.

The present invention also provides a laminated glass comprising the above laminated resin film and two glass plates laminated on each side of the laminated resin film.

Conventional laminated glass having crime prevention properties and fire resistance is based on the idea that a glass plate ensures fire resistance and a resin interlayer film ensures crime prevention properties. It has also been considered that when a glass plate is used as a fire resistant glass, such a glass plate must be reinforced except for wire glass. However, the present inventors conducted intensive studies without being constrained by such an idea, and as a result have found that fire resistance required for laminated glass can be obtained when both a non-tempered glass plate and a resin interlayer film are present even by using a non-tempered glass plate which does not have sufficient fire resistance, and the present invention has been completed.

To achieve the second object of the present invention, the present invention further provides a laminated glass comprising at least two non-tempered glass plates and at least one resin interlayer film which are bonded. At least one of the glass plates is a non-tempered borosilicate glass plate.

### Brief Description of the Drawings

Fig. 1(a) is a side view schematically illustrating part of a laminated resin film according to a first embodiment of the present invention;
Fig. 1(b) is a side view schematically illustrating part of a laminated glass according to the first embodiment;
Fig. 2(a) is a side view schematically illustrating part of a laminated resin film according to a second embodiment of the present invention;
Fig. 2(b) is a side view schematically illustrating part of a laminated glass according to the second embodiment;
Fig. 3(a) is a side view schematically illustrating part of a laminated resin film according to a third embodiment of the present invention;
Fig. 3(b) is a side view schematically illustrating part of a laminated glass according to the third embodiment;
Figs. 4(a) to (c) are each a side view schematically illustrating part of a laminated resin film according to other embodiments of the present invention;
Fig. 5 is a side view schematically illustrating part of a laminated glass according to another embodiment the present invention;
Figs. 6 (a) to (c) are schematic side views describing a method of lamination of a laminated glass according to other embodiments of the present invention;
Figs. 7 (a), (b) are side views schematically illustrating part of a double glass according to other embodiments of the present invention;
Fig. 8 is a side view schematically illustrating part of a laminated glass according to a fourth embodiment of the present invention; and
Fig. 9 is a side view schematically illustrating part of a laminated glass according to another embodiment of the present invention.

### Best Mode for Carrying Out the Invention

In the following, a first embodiment of the present invention is described.

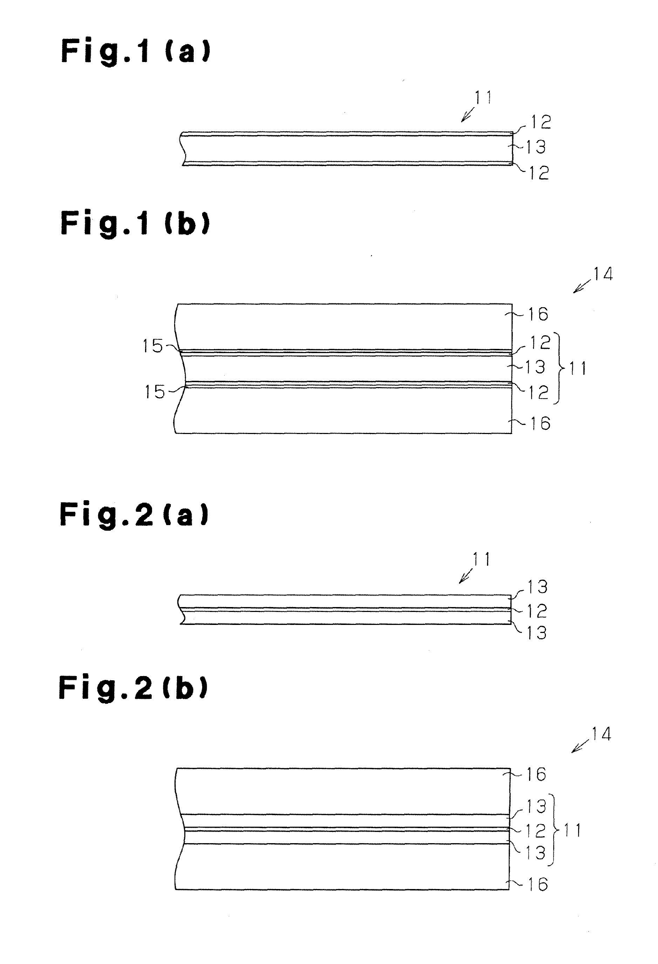

A laminated resin film 11 according to the first embodiment shown in Fig. 1(a) has a three-layer structure of two fluorine resin films 12 and a polyvinyl butyral film 13 provided between the fluorine resin films 12. In other words, in the laminated resin film 11, the fluorine resin film 12 is provided on each side of the polyvinyl butyral film 13, and each of the two fluorine resin films 12 constitutes one of both sides of the laminated resin film 11.

A laminated glass 14 according to the first embodiment shown in Fig. 1(b) comprises the laminated resin film 11 and glass plates 16 laminated on each side of the laminated resin film 11 with an adhesive layer 15 in between. In other words, the two glass plates 16 and the laminated resin film 11 are laminated and integrated with the adhesive layer 15 in between so that each of the two glass plates 16 constitutes one of both sides of the laminated glass 14.

The fluorine resin film 12 may be formed of a homopolymer or a copolymer of a fluorine containing monomer such as vinylidene fluoride, vinyl fluoride, trifluoroethylene, tetrafluoroethylene, pentafluoropropylene or hexafluoropropylene or a copolymer of the aforementioned fluorine containing monomer and a vinyl monomer such as ethylene or alkyl vinyl ether. The fluorine resin which is a material for forming the fluorine resin film 12 may be a resin which can be formed into a sheet by heat melting, and is not particularly limited as long as the resin is not a homopolymer of tetrafluoroethylene. In particular, polyvinylidene fluoride, polyvinyl fluoride, a tetrafluoroethylene-perfluoroalkyl vinyl ether copolymer, a tetrafluoroethylene-ethylene copolymer, a tetrafluoroethylene-hexafluoropropylene copolymer and a tetrafluoroethylene-hexafluoropropylene-vinylidene fluoride ternary copolymer are preferred because they have relatively high transparency.

Since fluorine resins are excellent in transparency and heat resistance, they are preferred as a material for forming an interlayer film of the laminated glass 14. In particular, a tetrafluoroethylene-hexafluoropropylene-vinylidene fluoride ternary copolymer (hereinafter THV copolymer) is preferred because it has high tensile strength and is excellent in impact resistance. Since THV copolymers have a melting point of as low as 110 to 180°C, no special facility is required for bonding. A preferred copolymerization ratio of the THV copolymer is such that the THV copolymer comprises 20 to 40% by weight of vinylidene fluoride, 20 to 60% by weight of tetrafluoroethylene and 5 to 30% by weight of hexafluoropropylene.

The fluorine resin film 12 has a thickness of preferably 0.05 mm or more, more preferably 0.1 mm or more. When the fluorine resin film 12 has a thickness of less than 0.05 mm, the fluorine resin film 12 cannot offset warpage or waviness on the surface of the glass plate 16 when the laminated resin film 11 is used as an interlayer film of the laminated glass 14. Further, bubbles remain after bonding, the appearance of the laminated glass 14 tends to be poor, the adhesiveness between the glass plate 16 and the fluorine resin film 12 tends to decrease and the impact resistance of the laminated glass 14 tends to decrease. The fluorine resin film 12 has a thickness of preferably 2.0 mm or less, because even if the fluorine resin film 12 has a thickness of more than 2.0 mm, only the cost is increased and improvement in the function of fire resistant laminated glass cannot be expected. For these reasons, preferably the thickness of the fluorine resin film 12 is accordingly selected from 0.05 to 2 mm.

The fluorine resin film 12 is produced by, for example, a known method including thermoplastic molding such as extrusion molding and calender molding.

The laminated resin film 11 may be formed by laminating separately prepared two fluorine resin films 12 and a polyvinyl butyral film 13, or by applying polyvinyl butyral to a fluorine resin film 12 thereby forming a polyvinyl butyral film 13 on the fluorine resin film 12 and then laminating a fluorine resin film 12 on the polyvinyl butyral film 13. An adhesive layer 15 is formed on a surface of the fluorine resin film 12 opposite from the surface facing the polyvinyl butyral film 13.

Desirably, the adhesion strength between the fluorine resin film 12 and the polyvinyl butyral film 13 is such that the fluorine resin film 12 is not released from the polyvinyl butyral film 13 upon formation of the adhesive layer 15 or bonding of the glass plate 16 and the laminated resin film 11. When a fluorine resin film 12 is bonded to a polyvinyl butyral film 13 using an adhesive, handling is easy compared to cases not using an adhesive. However, use of an adhesive is not essential in the present invention. Examples of adhesives used for bonding a polyvinyl butyral film 13 and a fluorine resin film 12 include fluorine adhesives and fluorine adhesives to which a silane coupling agent is added.

The polyvinyl butyral film 13 has a thickness of preferably 0.3 mm or more, more preferably 0.5 mm or more. When the polyvinyl butyral film 13 has a thickness of less than 0.3 mm, the fluorine resin film 12 must be thick so as to suitably use the laminated resin film 11 as an interlayer film of the laminated glass 14, and this results in increase in the cost. The polyvinyl butyral film 13 has a thickness of preferably 2.5 mm or less, because even if the polyvinyl butyral film 13 has a thickness of more than 2.5 mm, improvement in the function of laminated glass cannot be expected. For these reasons, preferably the thickness of the polyvinyl butyral film 13 is accordingly selected from 0.3 to 2.5 mm.

The polyvinyl butyral film 13 is formed from polyvinyl butyral to which a plasticizer is added. The plasticizer is added thereto in a ratio of preferably 5 to 50 parts by weight, more preferably 10 to 40 parts by weight based on 100 parts by weight of polyvinyl butyral.

While the adhesive constituting the adhesive layer 15 is not particularly limited, examples thereof include acrylic, fluorine, silicone or vinyl adhesives. Of these, acrylic adhesives are preferred. To bond the laminated resin film 11 and the glass plate 16 firmly, preferably an adhesion promoter such as a silane coupling agent is added to the adhesive constituting the adhesive layer 15. The adhesive layer 15 may be formed on a surface of the glass plate 16 facing the laminated resin film 11 by coating instead of being laminated on a surface of the fluorine resin film 12 opposite from the surface facing the polyvinyl butyral film 13.

Preferably, the adhesive layer 15 has a thickness of 0.001 to 5 µm. When the adhesive layer 15 has a thickness of less than 0.001 µm, high adhesion strength between the glass plate 16 and the fluorine resin film 12 cannot be achieved. Further, even if the adhesive layer 15 has a thickness of more than 5 µm, further increase in adhesion strength cannot be expected because the adhesion strength reaches the maximum.

The glass plate 16 is made of, for example, soda-lime glass or borosilicate glass. The glass plate 16 may be prepared by any known method such as a drawing method, a roll polishing method or a float method, and preferably by a roll polishing method or a float method. A glass plate 16 produced by a roll polishing method or a float method has a smooth surface with little surface defect or strain. In this embodiment, a float glass plate, which is a single glass, is used as the glass plate 16. The surface compressive stress of the glass plate 16 is smaller than the surface compressive stress of a conventional tempered glass used as single fire resistant glass.

The size and the form of the glass plate 16 are not particularly limited. Generally, plates of several hundred to 2000 mm square or rectangular plates having a length of 5000 mm or less are used. Neither is the thickness of the glass plate 16 particularly limited, but in terms of easy handling and workability, preferably the glass plate 16 has a thickness of about 2.5 to 12 mm.

A known method can be used for bonding (laminating) the glass plate 16 and the laminated resin film 11. For example, bonding can be performed by heating and pressing after disposing a laminated resin film 11 between two glass plates 16 with a fluorine resin film 12 being closely bonded to the glass plates 16 with an adhesive layer 15 in between. A heating furnace or a heating roll can be used for heating. Pressing using a press plate, passing through a nip roll, or a vacuum bag method in which a material is put into a rubber bag and the pressure is reduced can be used for pressing. These methods may be accordingly combined. Even if the adhesion strength between the fluorine resin film 12 and the polyvinyl butyral film 13 is small in the laminated resin film 11, the adhesion strength between the fluorine resin film 12 and the polyvinyl butyral film 13 is increased to the extent necessary for a laminated glass 14 through bonding.

Action of the laminated glass 14 is now described.

In a fire, first crack is generated by heat stress in a glass plate 16 facing the flame of the glass plates 16 constituting both sides of the laminated glass 14. Since the surface compressive stress of the glass plate 16 is smaller than the surface compressive stress of a conventional tempered glass used as single fire resistant glass, the glass plate 16 is broken by heat stress at an earlier stage compared to such a conventional fire resistant glass having improved heat resistance. However, fragments of glass produced upon break of the glass plate 16 do not come off, and remain bonded and held on the fluorine resin film 12. Therefore, flame does not reach the fluorine resin film 12 directly. As the temperature increases, the fluorine resin film 12 is decomposed and gasified. The produced gas is diffused through cracks in the glass plate 16 facing the flame and therefore the pressure between the two glass plates 16 is not increased to the extent that the glass plate 16 not facing the flame is broken. Further, as the glass broken by heat is fused again and serves as an insulation layer before the fluorine resin film 12 is decomposed and gasified and the produced gas is diffused and disappears, fire resistance required for fire resistant glass can be obtained.

Also, when a burglar attacks the laminated glass 14 with the intension of breaking the glass, the glass plate 16 is hardly broken and fragments do not fly even if the glass is broken because a laminated resin film 11 is present between glass plates 16 with an adhesive layer 15 in between. When an interlayer film present between glass plates 16 is composed of a flame retardant fluorine resin film 12 alone, the fluorine resin film 12, which is the interlayer film, must be very thick in order to ensure strength required for security glass in the laminated glass 14. In this case, the cost is increased because the fluorine resin film 12 is more expensive than the polyvinyl butyral film 13. However, since the laminated resin film 11 in the laminated glass 14 of the present embodiment has a polyvinyl butyral film 13 which produces strength necessary for security glass in the laminated glass 14, the thickness of the fluorine resin film 12 can be reduced to about 10 to 25% of the entire laminated resin film 11.

For breaking such a laminated glass without making much noise, there is an approach in which the glass plate 16 is repeatedly heated with a burner and cooled by pouring a sufficient amount of water from a water pot or putting a wet cloth thereon. When an interlayer film present between glass plates 16 is composed of a polyvinyl butyral film alone, holes can be relatively easily formed in laminated glass by burning molten polyvinyl butyral bleeding out through cracks on the glass plates formed by repeating heating and cooling. However, a fluorine resin film 12 is adjacent to a glass plate 16 with an adhesive layer 15 in between in the laminated glass 14 of the present embodiment. The fluorine resin film 12 does not melt although it may be carbonized when heated with a burner. For this reason, even if cracks are generated in the glass plate 16 by repeating heating and cooling, forming a hole is relatively difficult.

### (Examples and Comparative Examples)

In the following, the present invention is described in more detail by means of Examples and Comparative Examples.

In Examples, a laminated glass using the laminated resin film 11 shown in Fig. 1(a) as an interlayer film was prepared. A laminate in which two fluorine resin films 12 of THV having a thickness of 0.1 mm and a polyvinyl butyral film 13 having a thickness of 0.76 mm were alternately laminated was used as the laminated resin film 11. A soda-lime float glass plate or a borosilicate float glass plate having a thickness of 3 mm and a predetermined size was used as the glass plate. The glass plate has a size of 1930 × 864 mm for a shot bag test, 1100 × 900 mm for a steel ball drop test, and 600 × 600 mm for a fire resistance test. An adhesive containing an acrylic ester copolymer and an epoxy silane coupling agent was used for bonding the glass plates and the interlayer film. The glass plates and the interlayer film were bonded at 140°C in 20 minutes using a vacuum bag.

In Comparative Examples, a laminated glass using a polyvinyl butyral film having a thickness of 0.38 mm as an interlayer film instead of the laminated resin film 11, a laminated glass using a polyvinyl butyral film having a thickness of 0.76 mm as an interlayer film instead of the laminated resin film 11, and a laminated glass using a THV film having thickness of 0.8 mm as an interlayer film instead of the laminated resin film 11 were prepared.

The impact resistance and the fire resistance of the laminated glasses of Examples and the laminated glasses of Comparative Examples were evaluated as follows.

### <Evaluation of impact resistance (steel ball drop test)>

A steel ball with a diameter of 100 mm and a weight of about 4.11 kg is dropped to the apexes of a regular triangle 130 mm on a side at about the center of each laminated glass once each in sequence from a height of 9 m. The test is performed for three samples and cases in which the steel ball does not penetrate all the three samples are rated "pass".

### <Evaluation of impact resistance (shot bag test)>

A shot bag of 45 kg connected to a steel stranded wire is allowed to free fall in a pendulum motion to hit the center of a laminated glass fixed in a predetermined test frame according to the shot bag test defined in JIS R3205. The distance of fall of the shot bag was set to 120 cm. Glass which is not broken is evaluated as "Excellent" (o), glass which is broken is evaluated as "Somewhat Poor" (Δ) and glass through which the shot bag penetrates is evaluated as "Poor" (×).

### <Fire resistance test>

In the fire resistance test, laminated glass was continuously heated for 5 minutes with the tip of the flame of a burner placed at a distance of 100 mm from the laminated glass reaching the center of the laminated glass.

### [Results of evaluation]

The laminated glass of Examples using the laminated resin film 11 as an interlayer film passed the steel ball drop test and was evaluated as "Excellent" (o) in the shot bag test. Further, in the fire resistance test, the heated part caught fire 1 minute and 40 seconds after the start of heating and then was blackened (carbonized). 2 minutes and 57 seconds after the start of heating, the glass plate facing the flame cracked and 4 minutes and 41 seconds after the start of heating, the glass plate facing the flame has exploded. However, even 5 minutes after the start of heating, no penetration occurred.

On the other hand, the laminated glass of Comparative Example using a polyvinyl butyral film having a thickness of 0.76 mm or a THV film as an interlayer film passed the steel ball drop test and was evaluated as "Excellent" (o) in the shot bag test. When the laminated glass of Comparative Example using a polyvinyl butyral film 13 having a thickness of 0.76 mm as an interlayer film was subjected to the fire resistance test, the heated part caught fire and burned greatly 57 seconds after the start of heating, and so the test was discontinued. When the laminated glass of Comparative Example using a polyvinyl butyral film 13 having a thickness of 0.38 mm as an interlayer film was subjected to the fire resistance test, the glass plate facing the flame has exploded 1 minute and 17 seconds after the start of heating, and the glass plate not facing the flame has melted 2 minutes and 12 seconds after the start of heating. On the other hand, when the laminated glass of Comparative Example using a THV film as an interlayer film was subjected to the fire resistance test, the heated part caught fire 1 minute and 10 seconds after the start of heating and then was blackened (carbonized). The glass remained in that state even 5 minutes after the start of heating and no penetration occurred.

The above results show that all the laminated glasses of Examples and Comparative Examples have crime prevention properties against "breaking" which is an intention of destroying glass by attacking. The results also show that the laminated glasses of Comparative Examples using a polyvinyl butyral film as an interlayer film have insufficient fire resistance.

The first embodiment has the following advantages.
(1) The laminated resin film 11 shown in Fig. 1(a) is formed by lamination of a polyvinyl butyral film 13 and two fluorine resin films 12. When this laminated resin film 11 is used as an interlayer film of a laminated glass 14, the polyvinyl butyral film 13 provides the laminated glass 14 with strength required for security glass even if the thickness of the fluorine resin film 12 is not increased, and the fluorine resin film 12 provides the laminated glass 14 with fire resistance.
(2) Each of the fluorine resin films 12 constitutes one of both sides of the laminated resin film 11. Therefore, although the glass plate 16 facing flame in the laminated glass 14 using the laminated resin film 11 as an interlayer film is broken at an earlier stage during fire compared to conventional fire resistant glass, fragments of the glass plate 16 remain bonded and held on the fluorine resin film 12 and do not come off. Further, as the glass broken by heat is fused again and serves as an insulation layer before the fluorine resin film 12 is decomposed and gasified and the produced gas is diffused and disappears, fire resistance is improved.
   Moreover, even by repeating heating with a burner and cooling by pouring water with the intension of destroying the laminated glass 14 without making much noise, it takes more time to break the glass compared to glass whose interlayer film between glass plates 16 is formed from a polyvinyl butyral film alone, and therefore crime prevention properties are improved.
(3) Since a float plate glass is used as the glass plate 16 in the laminated glass 14 shown in Fig. 1(b), the glass plate 16 has small warpage or waviness. Moreover, since deformation of the fluorine resin film 12 offsets warpage and waviness on the glass plate 16 in usual bonding conventionally performed, bubbles do not remain and crime prevention properties and fire resistance of the laminated glass 14 are improved.
(4) When the glass plate 16 is made of soda-lime glass or borosilicate glass, the production cost of the laminated glass 14 is reduced because such materials are easily available.
(5) When the fluorine resin film 12 is composed of a THV copolymer, since the THV copolymer has a melting point of 110 to 180°C which is significantly lower than the melting point of other fluorine resins, processability is improved and bonding to the glass plate 16 is easier.
   A second embodiment of the present invention is now described with reference to Figs. 2(a), 2(b). The second embodiment is different from the first embodiment in the structure of the laminated resin film 11. In the following description of the second embodiment, the same symbols are used for the parts common with those in first embodiment without detailed description, while different parts are described in more detail.
   The laminated resin film 11 according to the second embodiment shown in Fig. 2(a) has a three-layer structure of two polyvinyl butyral films 13 and a fluorine resin film 12 provided between the polyvinyl butyral films 13. In other words, in the laminated resin film 11, the polyvinyl butyral film 13 is provided on each side of the fluorine resin film 12 and each of the two polyvinyl butyral films 13 constitutes one of both sides of the laminated resin film 11.
   The thickness of the fluorine resin film 12 is the same as the thickness of the fluorine resin film 12 in the laminated resin film 11 according to the first embodiment. The thickness of the polyvinyl butyral film 13 is half the thickness of the polyvinyl butyral film 13 in the laminated resin film 11 according to the first embodiment.
   A laminated glass 14 according to the second embodiment shown in Fig. 2(b) comprises the laminated resin film 11 and glass plates 16 laminated on each side of the laminated resin film 11. In other words, the two glass plates 16 and the laminated resin film 11 are laminated and integrated so that each of the two glass plates 16 constitutes one of both sides of the laminated glass 14.
   In the laminated glass 14 shown in Fig. 2(b) using the laminated resin film 11 shown in Fig. 2(a) as an interlayer film, each glass plate 16 is laminated on the laminated resin film 11 so that the glass plate 16 faces the polyvinyl butyral film 13. Accordingly, the laminated glass can be produced in facilities similar to those for producing conventional laminated glass in which a polyvinyl butyral film is used as an interlayer film.

### (Example)

A laminated glass using the laminated resin film 11 shown in Fig. 2(a) as an interlayer film was prepared. A laminate in which a fluorine resin film 12 of THV having a thickness of 0.1 mm and two polyvinyl butyral films 13 having a thickness of 0.38 mm were alternately laminated was used as the laminated resin film 11. A soda-lime float glass plate or a borosilicate float glass plate having a thickness of 3 mm and a predetermined size was used as the glass plate. An adhesive containing an acrylic ester copolymer and an epoxy silane coupling agent was used for bonding the glass plates and the interlayer film. The glass plates and the interlayer film were bonded at 140°C in 20 minutes using a vacuum bag.

The impact resistance and the fire resistance of the laminated glass of the second embodiment thus prepared were evaluated in the same manner as in Examples and Comparative Examples of the first embodiment. As a result, the laminated glass passed the steel ball drop test and was evaluated as "Excellent" (o) in the shot bag test. Further, in the fire resistance test, the heated part caught fire 1 minute and 22 seconds after the start of heating and then was blackened (carbonized). Further, 2 minutes after the start of heating, the glass plate facing the flame has cracked and 3 minutes after the start of heating, the polyvinyl butyral film 13 adjacent to the glass plate not facing the flame has melted. However, even 5 minutes after the start of heating, no penetration occurred. The results of the fire resistance test show that the laminated glass of the first embodiment has better fire resistance than the laminated glass 14 of the second embodiment.

The second embodiment has the following advantage in addition to the advantages (1), (3) to (5) of the first embodiment.
(6) Each of the polyvinyl butyral films 13 constitutes one of both sides of the laminated resin film 11. In the laminated glass 14 using the laminated resin film 11 as an interlayer film, each glass plate 16 is laminated on the laminated resin film 11 so that the glass plate 16 faces the polyvinyl butyral film 13. Accordingly, the laminated glass can be produced in facilities similar to those for producing conventional laminated glass in which a polyvinyl butyral film is used as an interlayer film.

A third embodiment of the present invention is now described with reference to Figs. 3(a), 3(b). The third embodiment is different from the first and the second embodiments in the structure of the laminated resin film 11. In the following description of the third embodiment, the same symbols are used for the parts common with those in the first and the second embodiments without detailed description, while different parts are described in more detail.

The laminated resin film 11 according to the third embodiment shown in Fig. 3(a) has a two-layer structure of a fluorine resin film 12 and a polyvinyl butyral film 13 which are laminated. In other words, in the laminated resin film 11, the fluorine resin film 12 and the polyvinyl butyral films 13 each constitute one of both sides of the laminated resin film 11.

The thickness of the fluorine resin film 12 is the same as the thickness of the fluorine resin film 12 in the laminated resin film 11 according to the first and the second embodiments The thickness of the polyvinyl butyral film 13 is the same as the thickness of the polyvinyl butyral film 13 in the laminated resin film 11 according to the first embodiment.

A laminated glass 14 according to the third embodiment shown in Fig. 3(b) comprises the laminated resin film 11 and glass plates 16 laminated on each side of the laminated resin film 11. In other words, the two glass plates 16 and the laminated resin film 11 are laminated and integrated so that each of the two glass plates 16 constitutes one of both sides of the laminated glass 14. More specifically, the glass plate 16 facing the fluorine resin film 12 in the laminated resin film 11 is laminated on the laminated resin film 11 with an adhesive layer 15 in between, and the glass plate 16 facing the polyvinyl butyral film 13 in the laminated resin film 11 is laminated on the laminated resin film 11 without an adhesive layer 15.

The direction of the laminated glass 14 shown in Fig. 3(b) using the laminated resin film 11 shown in Fig. 3(a) as an interlayer film when attaching the laminated glass 14 to a door or a window is different depending on whether fire resistance is of major interest or crime prevention properties are of major interest. When the fire resistance inside a building is of major interest, the laminated glass 14 is used with the glass plate 16 facing the fluorine resin film 12 being directed inside. In that case, the laminated glass 14 has fire resistance against fire inside the building equivalent to that of the laminated glass 14 of the first embodiment. On the other hand, when importance is attached to preventing breaking from outside, the laminated glass 14 is used with the glass plate 16 facing the fluorine resin film 12 being directed outside the building. In that case, the laminated glass 14 has crime prevention properties, more specifically, penetration resistance against repeating heating with a burner and cooling by putting a wet cloth, equivalent to that of the laminated glass 14 of the first embodiment. Since the direction of the laminated glass 14 upon application is different depending on the purpose of use, a mark indicating the side of the fluorine resin film 12 or the side of the polyvinyl butyral film 13 is formed on each surface of the laminated glass 14.

### (Example)

A laminated glass using the laminated resin film 11 shown in Fig. 3(a) as an interlayer film was prepared. A laminate in which a fluorine resin film 12 of THV having a thickness of 0.1 mm and a polyvinyl butyral film 13 having a thickness of 0.76 mm were laminated was used as the laminated resin film 11. A soda-lime float glass plate or a borosilicate float glass plate having a thickness of 3 mm and a predetermined size was used as the glass plate 16. An adhesive containing an acrylic ester copolymer and an epoxy silane coupling agent was used for bonding the glass plates and the interlayer film. The glass plates and the interlayer film were bonded at 140°C in 20 minutes using a vacuum bag.

The impact resistance and the fire resistance of the laminated glass of the third embodiment thus prepared were evaluated in the same manner as in Examples and Comparative Examples of the first embodiment. As a result, the laminated glass passed the steel ball drop test and was evaluated as "Excellent" (o) in the shot bag test. Further, in the fire resistance test in which the glass plate facing the fluorine resin film 12 is heated, the heated part caught fire 1 minute and 8 seconds after the start of heating and then was blackened (carbonized). Further, 4 minutes and 45 seconds after the start of heating, the glass plate facing the flame has cracked, but even 5 minutes after the start of heating, no penetration occurred. On the other hand, in the fire resistance test in which the glass plate facing the polyvinyl butyral film 13 is heated, the heated part caught fire 1 minute and 9 seconds after the start of heating and then was blackened (carbonized). Further, 2 minutes after the start of heating, the glass plate facing the flame has cracked, but even 5 minutes after the start of heating, no penetration occurred.

The third embodiment has the following advantage in addition to the advantages (1), (3) to (5) of the first embodiment.
(7) Since the laminated resin film 11 has a two-layer structure of a fluorine resin film 12 and a polyvinyl butyral film 13, production is easier compared to laminated resin films having a layer structure of three or more layers.

The first to the third embodiments may be modified as follows.

The laminated resin film 11 may comprise at least one polyvinyl butyral film 13 and at least one fluorine resin film 12 which are laminated, and the structure is not limited to the two-layer or three-layer structure. A layer structure of four or more layers may also be employed. When the laminated resin film 11 has an even number of four or more layers, a fluorine resin film 12 and a polyvinyl butyral film 13 each constitute one of both sides of the laminated resin film 11 as in the laminated resin film 11 shown in Fig. 4(a). When the laminated resin film 11 has an odd number of five or more layers, each of the two fluorine resin films 12 constitutes one of both sides of the laminated resin film 11 as in the laminated resin film 11 shown in Fig. 4(b) or each of the two polyvinyl butyral films 13 constitutes one of both sides of the laminated resin film 11 as in the laminated resin film 11 shown in Fig. 4(c).

When the laminated resin film 11 contains a plurality of fluorine resin films 12, the thickness of the fluorine resin films 12 may be the same or different from each other. Likewise, when the laminated resin film 11 contains a plurality of polyvinyl butyral films 13, the thickness of the polyvinyl butyral films 13 may be the same or different from each other.

When a fluorine resin film 12 constitutes at least one of both sides of a laminated resin film 11, an adhesive layer 15 may be previously formed on the surface of the fluorine resin film 12. This saves the labor of forming an adhesive layer 15 upon lamination of the laminated resin film 11 and glass plates 16.

As long as each of the two glass plates 16 constitutes one of both sides of the laminated glass 14, the laminated glass 14 may contain, for example, three glass plates 16 as in the laminated glass 14 shown in Fig. 5, or four or more glass plates 16. Although the laminated resin film 11 according to the first embodiment is used as an interlayer film in the laminated glass 14 shown in Fig. 5, the laminated resin film used as an interlayer film is not limited to the laminated resin film 11 according to the first embodiment.

The thickness of the glass plates 16 in the laminated glass 14 may be the same or different from each other.

In a laminated glass 14 using the laminated resin film 11 shown in Fig. 3(a) as an interlayer film and containing three or more glass plates 16, preferably the laminated resin film 11 and the glass plates 16 are laminated so that the fluorine resin film 12 faces the outermost glass plate 16.

The method of producing a laminated glass 14 is not limited to a method in which a laminated resin film 11 and the glass plates 16 are bonded with the laminated resin film 11 being sandwiched between the glass plates 16. For example, as shown in Fig. 6(a), two glass plates 16 to which a fluorine resin film 12 is bonded to one side with an adhesive layer 15 in between are prepared, and a laminated glass 14 may be produced by heating and pressing with a polyvinyl butyral film 13 being disposed between the two glass plates 16. Alternatively, as shown in Fig. 6(b), two glass plates 16 to which a polyvinyl butyral film 13 is bonded to one side are prepared, and a laminated glass 14 may be produced by heating and pressing with a fluorine resin film 12 being disposed between the two glass plates 16. Or, as shown in Fig. 6(c), a glass plate 16 to which a polyvinyl butyral film 13 is bonded to one side and a glass plate 16 to which a fluorine resin film 12 is bonded to one side with an adhesive layer 15 in between are prepared, and a laminated glass 14 may be produced by heating and pressing the two glass plates 16 with the fluorine resin film 12 and the polyvinyl butyral film 13 being disposed so as to face with each other.

The glass plates 16 in the laminated glass 14 may be a non-tempered glass plate or a tempered glass plate. A non-tempered glass plate and a tempered glass plate may be used in combination. The glass plate 16 may be a wire glass plate.

Either a soda-lime glass plate or a borosilicate glass plate alone may be used as the glass plate 16 in the laminated glass 14, or such a soda-lime glass plate and a borosilicate glass plate may be used in combination.

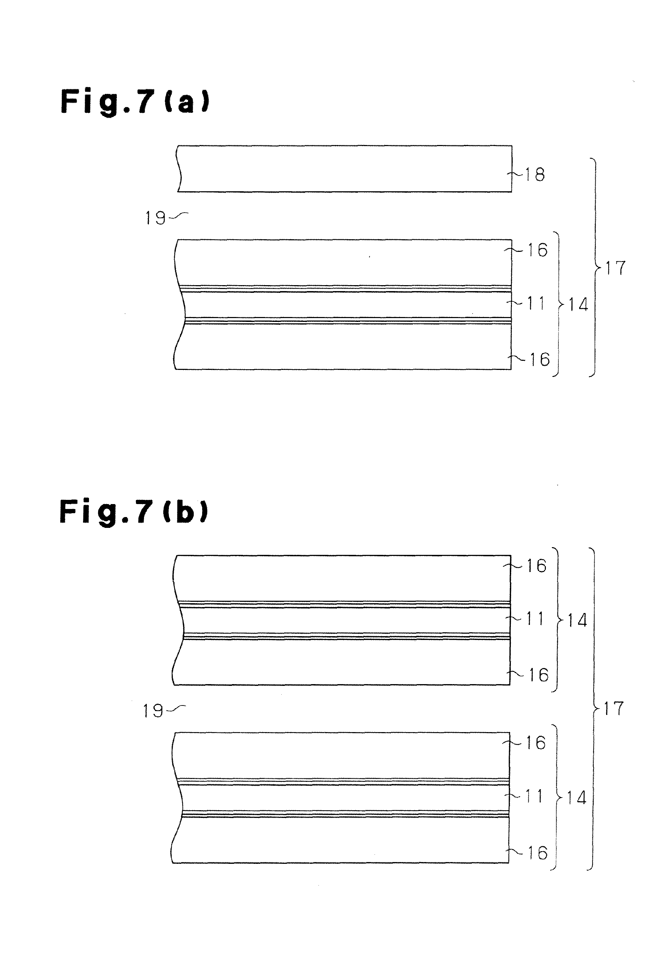

The laminated glass 14 may be used for a double glass 17 in which the laminated glass 14 and a single glass 18 are disposed with an unillustrated spacer in between so that an air layer 19 is present between the laminated glass 14 and the single glass 18 as shown in Fig. 7(a). Alternatively, the laminated glass 14 may be used for a double glass 17 in which two laminated glasses 14 are disposed with an unillustrated spacer in between so that an air layer 19 is present between the two laminated glasses 14 as shown in Fig. 7(a).

A fourth embodiment of the present invention is now described.

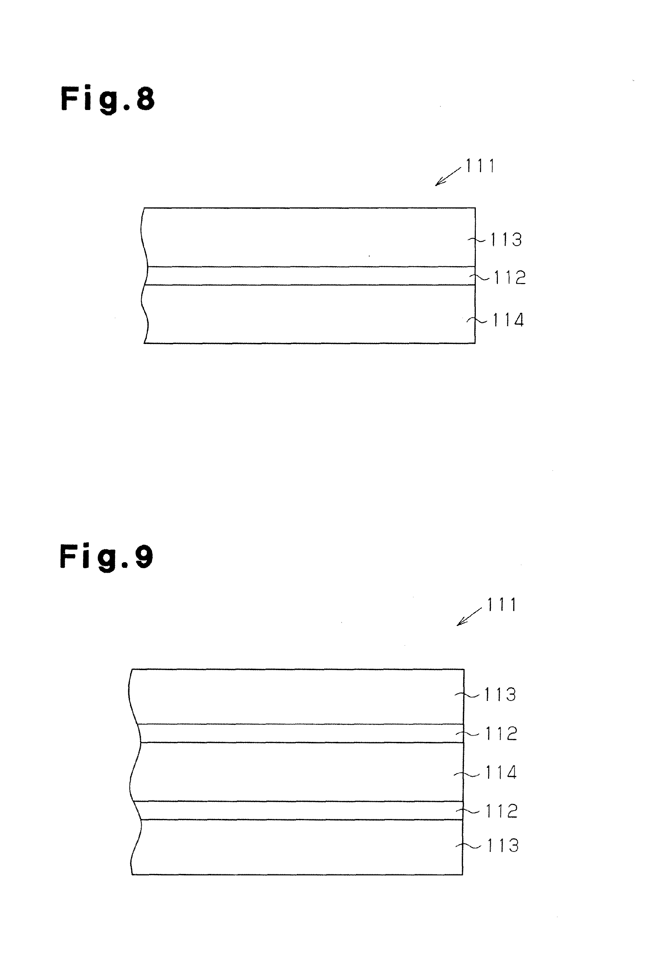

A laminated glass 111 according to the fourth embodiment shown in Fig. 8 is composed of two non-tempered glass plates 113, 114 bonded with a resin film 112 which is a resin interlayer film in between. The glass plate 113 is a borosilicate glass plate and the glass plate 114 is, for example, a soda-lime glass plate or a borosilicate glass plate.

The glass plates 113, 114 may be produced by any known method such as a drawing method, a roll polishing method or a float method, and preferably by a float method. Glass plates 113, 114 produced by a float method are preferred because they have a smooth surface with little surface defect or strain.

The size and the form of the glass plates 113, 114 are not particularly limited. Generally, plates of several hundred to 2300 mm square or rectangular plates having a length of 5000 mm or less are used. Neither is the thickness of the glass plates 213, 114 particularly limited, but in terms of easy handling and workability, preferably the glass plates 113, 114 have a thickness of about 2 to 15 mm.

The resin film 112 is, for example, a THV copolymer film, a polyvinyl butyral (PVB) film or a polyethylene vinyl acetate (EVA) film. The resin film 112 may also be a laminate formed by laminating a polyvinyl butyral film or a polyethylene vinyl acetate film and a THV copolymer film.

Preferably, the thickness of the resin film 112 is accordingly selected from 0.1 mm to 3 mm. When the resin film 112 has a thickness of less than 0.1 mm, bubbles remain after bonding the resin film 112 to the glass plate 114, often resulting in poor appearance of the laminated glass 111, decrease in the adhesiveness between the glass plate 114 and the resin film 112 and decrease in the impact resistance of the laminated glass 111. To provide the laminated glass 111 with excellent crime prevention properties, the resin film 112 has a thickness of preferably 1 mm in the case where the resin film 112 is a THV copolymer film.

When the resin film 112 is a THV copolymer film, an adhesive layer is preferably provided at the interface of each of the glass plates 113, 114 and the resin film 112. While the adhesive constituting the adhesive layer is not particularly limited, examples thereof include acrylic, fluorine, silicone or vinyl adhesives. To bond the glass plates 113, 114 and the resin film 112 firmly, preferably an adhesion promoter such as a silane coupling agent is added to the adhesive. The adhesive layer may be formed on the surface of the resin film 112 or on the surface of the glass plates 113, 114 facing the resin film 112 by coating.

The resin film 112 may be a laminate of a THV copolymer film and two or more other films. In that case, the THV copolymer film may constitute either of both sides of the resin film 112, or a film other than the THV copolymer film may constitute each side of the resin film 112.

Action of the laminated glass 111 is now described.

The glass plates 113, 114 or the laminated glass 111 shown in Fig. 8 are both non-tempered. Therefore, unlike conventional fire resistant glass using a tempered glass plate, the laminated glass 111 can be easily cut without cracking in all directions from a notched portion when notched with a glass cutter or impact is applied to the notched portion after notching for cutting the laminated glass 111. Accordingly, the laminated glass 111 can be easily cut into a desired size in working sites.

It has been thought that to obtain required fire resistance of laminated glass, a glass plate used for the laminated glass itself must have sufficient fire resistance. Therefore, tempered glass or wire glass has been used as a glass plate. However, in the case of the laminated glass 111 shown in Fig. 8, required fire resistance can be obtained without using tempered glass or wire glass. Although the non-tempered borosilicate glass plate 113 used for the laminated glass 111 has a low coefficient of linear expansion, the glass plate itself does not have sufficient fire resistance. However, since the laminated glass 111 has the resin film 112 as a resin interlayer film, broken pieces of the borosilicate glass plate 113 do not come off and remain bonded and held on the resin film 112 even if the borosilicate glass plate 113 is cracked in a fire, producing a flame blocking effect. Accordingly, the laminated glass 111 exhibits good fire resistance. Further, the laminated glass 111 presents high safety and crime prevention properties by the action of the resin film 112.

When a non-tempered glass plate having high surface smoothness is used, remaining of bubbles after bonding is reduced, and the appearance, the impact resistance and the fire resistance of the laminated glass 111 are improved. Since the laminated glass 111 does not contain a metal thin film, the laminated glass 111 has better appearance compared to conventional laminated glass containing a metal thin film.

### (Examples and Comparative Examples)

In Examples 1 to 10, laminated glasses in which two glass plates are bonded with a resin film in between were prepared. The details of the glass plate and the resin film of the laminated glasses of Examples 1 to 10 are as shown in Table 1. In Comparative Examples 1 to 3, single glasses were prepared and in Comparative Examples 4 to 12, laminated glasses were prepared. The details of the glass plate of the single glasses of Comparative Examples 1 to 3 and the details of the glass plate and the resin film of the laminated glasses of Comparative Examples 4 to 12 are as shown in Table 2.

In the column of "glass plate" in Table 1 and Table 2, "FL" represents a non-tempered soda-lime glass plate produced by a float method, "BR" represents a non-tempered borosilicate glass plate (TEMPAX available from Shott AG), "TP" represents a thermally tempered soda-lime glass plate and "super-tempered glass" represents Pyroclear available form Nippon Sheet Glass Co. Ltd. The numbers in the column of "glass plate" indicate the thickness (mm) of the glass plates. For example, FL3 means a non-tempered soda-lime glass plate having a thickness of 3 mm. In the column of the "resin film" in Table 1 and Table 2, "THV" represents a THV copolymer film, PVB represents a polyvinyl butyral film, cross-linked PVB represents a cross-linked polyvinyl butyral film and EVA represents a polyethylene vinyl acetate film. The numbers in the column of the "resin film" indicate the thickness (µm) of the resin film. For example, PVB760 means a polyvinyl butyral film having a thickness of 760 µm.

The "appearance", "ease of cutting", "fire resistance" and "crime prevention properties" of the laminated glasses of Examples 1 to 10 and Comparative Examples 4 to 12, and the "ease of cutting", "fire resistance" and "crime prevention properties" of the single glasses of Comparative Examples 1 to 3 were evaluated as follows. The results of the evaluation are shown in Table 1 and Table 2. The laminated glasses and the single glasses have a size of 500 mm × 500 mm for the evaluation of appearance and ease of cutting, 700 mm × 700 mm for the evaluation of fire resistance, and 900 mm × 1100 mm for the evaluation of crime prevention properties.

### [Appearance]

The appearance of the laminated glasses after bonding was visually observed. Laminated glasses in which no bubble remained between the glass plates 113, 114 and the resin film 112 without peeling at the end portions were evaluated as "Pass" (o) and those in which bubbles remained or with peeling at the end portions were evaluated as "Failure" (×).

### [Ease of cutting]

Laminated glasses which could be normally cut at a working site were evaluated as "Pass" (o) and those which could not be normally cut were evaluated as "Failure" (x). The laminated glass 111 was cut as follows. First, both sides of the laminated glass 111 are notched with a glass cutter and the glass plate is broken by applying impact on the notched portion. The resin film 112 is cut through the crack in the broken glass plate.

### [Fire resistance]

A sample was heated using a gas heating furnace based on a standard fire curve defined in the Building Standard Law Enforcement Order Article 112, Item 1. Laminated glasses with a flame blocking time of 20 minutes or more were evaluated as "Excellent" (o), those with a flame blocking time of 10 minutes to less than 20 minutes as "Moderate" (Δ), and those with a flame blocking time of less than 10 minutes as "Failure" (×). Laminated glasses in which a non-tempered soda-lime glass plate and another glass plate were tested in such a manner that the non-tempered soda-lime glass plate faced the inside of the furnace. The flame blocking time of 20 minutes or more corresponds to "Pass B" and the flame blocking time maintaining 60 minutes corresponds to "Pass A" in accordance with the Notice No. 1125 of the former Ministry of Construction. A longer flame blocking time means that the time for people to evacuate is longer in a fire. When the flame blocking time is about twice the flame blocking time (about 5 minutes) of conventional security glass (Comparative Example 4), it can be considered that there is great improvement in fire resistance, and therefore laminated glasses with a flame blocking time of 10 minutes or more were determined "Pass" in the test.

### [Crime prevention properties]

The steel ball drop test of Class P2A was performed in accordance with the crime prevention property standard defined in European Standard EN356. A steel ball with a diameter of 100 mm and a weight of 4.11 kg was dropped to the apexes of a regular triangle with a side of 130 mm on a side drawn at about the center of a sample once each in sequence from a height of 3 m. Laminated glasses through which the steel ball did not penetrate were evaluated as "Pass" (o) and those through which the steel ball penetrated were evaluated as "Failure" (×).

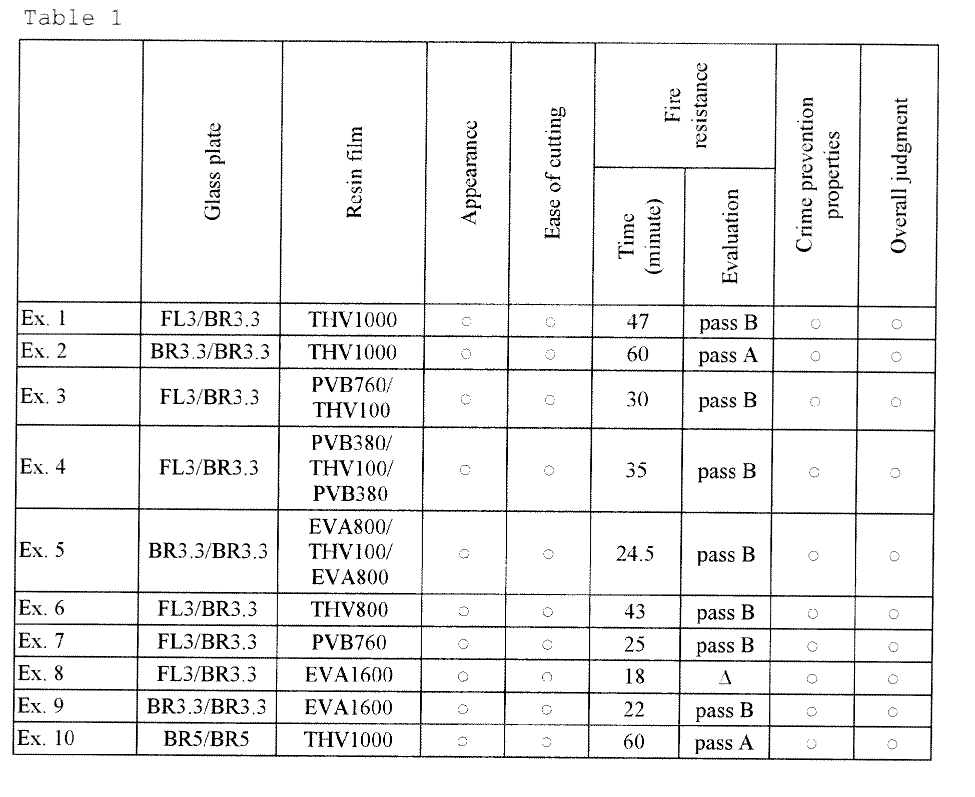

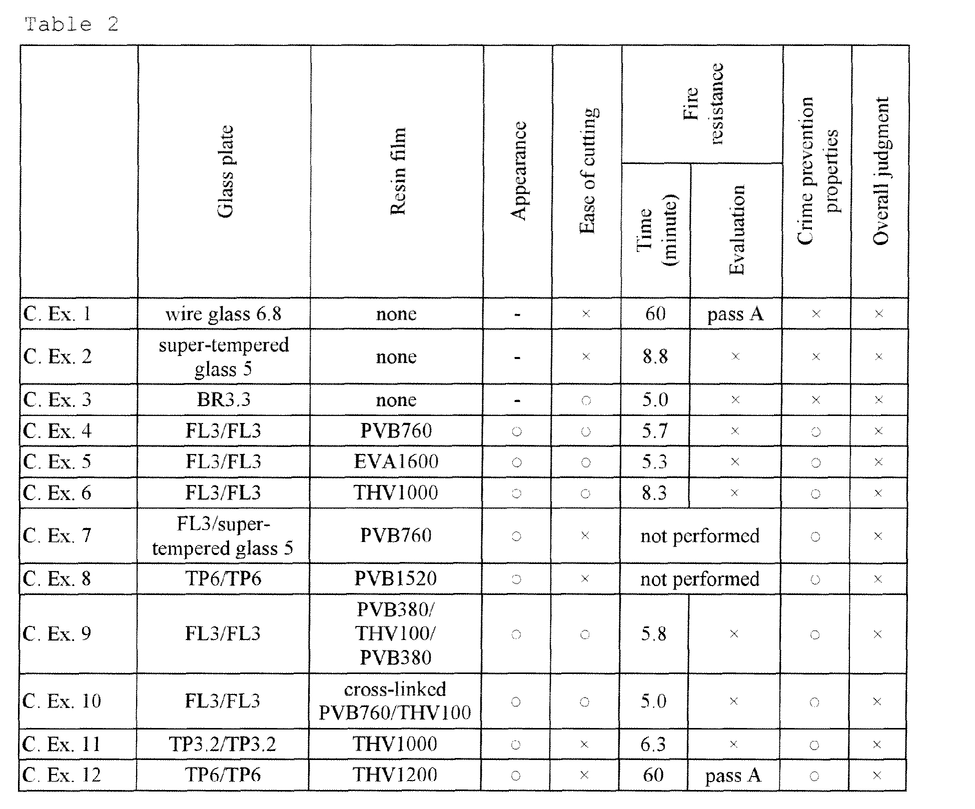

As is evident from Table 1 and Table 2, the laminated glasses of Examples 1 to 10 using at least one non-tempered borosilicate glass plate were rated as pass in all the evaluation items. In contrast, the single glasses of Comparative Examples 1 to 3 were rated as failure in crime prevention properties and the single glasses of Comparative Examples 1, 2 were rated as failure also in ease of cutting. Further, while the laminated glasses of Comparative Examples 4 to 6, 9, 10 using a non-tempered soda-lime glass plate on each side were rated as pass in crime prevention properties and ease of cutting, all were rated as failure in fire resistance. In short, the results show that when a non-tempered soda-lime glass plate originally having low fire resistance alone is used as a glass plate for laminated glass, required fire resistance cannot be obtained even if a different type of resin interlayer film (resin film 112) is used.

Further, the results from the laminated glasses of Comparative Examples 11, 12 using a thermally tempered soda-lime glass plate show that even a laminated glass using a tempered glass plate may fail to pass the criterion of fire resistance as in Comparative Example 11. The difference between Comparative Example 11 and Comparative Example 12 is that while the glass plate has a thickness of 3.2 mm and a THV film having a thickness of 1000 µm is used as a resin interlayer film in Comparative Example 11, the glass plate has a thickness of 6 mm and a THV film having a thickness of 1200 µm is used as a resin interlayer film in Comparative Example 12. Tempered glass plates have a strain pattern produced in the tempering process on the surface, and the thinner the glass plate, the greater the adverse effect of the strain pattern. This seems to be the reason why the laminated glass in Comparative Example 11 did not pass the criterion of fire resistance. This shows that required fire resistance is difficult to obtain when a tempered glass plate having a thickness of about 3 mm is used. On the other hand, required fire resistance could be obtained in the case of laminated glasses using at least one non-tempered borosilicate glass plate even when the borosilicate glass plate has a thickness of as thin as 3.2 mm.

The fourth embodiment has the following advantages.
(1) The laminated glass 111 shown in Fig. 8 is formed by bonding a non-tempered borosilicate glass plate 113 and a non-tempered glass plate 114 with a resin film 112 in between. Since the non-tempered borosilicate glass plate 113 has a low coefficient of linear expansion and the resin film 112 holds broken pieces of the borosilicate glass plate 113 even if the borosilicate glass plate 113 is cracked in a fire, required fire resistance of the laminated glass 222 can be obtained. Further, the laminated glass 111 has high safety and crime prevention properties by the action of the resin film 112. Moreover, since the laminated glass 111 does not contain a metal thin film, the laminated glass 111 is excellent in appearance.
(2) Since the glass plates 113, 114 of the laminated glass 111 are both non-tempered, the laminated glass 111 can be easily cut in working sites. Further, the laminated glass 111 has better bonding properties compared to a laminated glass using a tempered glass plate.
(3) When the resin film 112 is a THV copolymer film, fire resistance is improved compared to the case where the resin film 112 is a polyvinyl butyral film. Since a THV copolymer has a lower melting point compared to other fluorine resins, bonding properties are also improved when the resin film 112 is a THV copolymer film compared to the case where the resin film 112 is another fluorine resin film.
(4) When the resin film 112 is a laminate of a polyvinyl butyral film and a THV copolymer film, crime prevention properties are improved and the laminated glass 111 can be produced at a lower cost compared to the case where the resin film 112 is composed of a fluorine resin alone.
(5) When the resin film 112 is a laminate of a polyethylene vinyl acetate film and a THV copolymer film, the laminated glass 111 can be produced at a lower cost compared to the case where the resin film 112 is composed of a fluorine resin alone.
(6) When the resin film 112 is a polyvinyl butyral film, crime prevention properties are improved compared to the case where the resin film 112 is a fluorine resin film.
(7) When the resin film 112 is a polyethylene vinyl acetate film, crime prevention properties are improved compared to the case where the resin film 112 is a fluorine resin film.

The fourth embodiment may be modified as follows.

The resin film 112 may be formed of a fluorine resin other than a THV copolymer, such as polyvinylidene fluoride, a tetrafluoroethylene-perfluoroalkoxyethylene copolymer (PFA) or fluorinated ethylene propylene.

When the resin film 112 is a laminate, the resin film 112 may be a laminate of a two-layer structure or a three-layer structure, or a laminate having four or more layers.

As long as each of two glass plates constitutes one of both sides of the laminated glass 111, the laminated glass 111 may contain three glass plates as in the laminated glass 111 shown in Fig. 9, or four or more glass plates.

The thickness of the glass plates 113, 114 in the laminated glass 111 may be the same or different from each other.

The resin film 112 may be subjected to flame retardant treatment. When the resin film 112 is subjected to flame retardant treatment, the fire resistance of the laminated glass 111 is further improved. When the resin film 112 is a THV copolymer film, for example, the THV copolymer film may be cross-linked by irradiating with radiation such as y rays before or after bonding to the glass plates 113, 114. However, to avoid coloring of the glass plates 113, 114 by irradiation of radiation, preferably a THV copolymer film is irradiated with radiation before bonding to the glass plates 113, 114. When the resin film 112 is a polyvinyl butyral film, the amount added of a plasticizer in the polyvinyl butyral film may be reduced, or a phosphorus flame retardant may be added. When the resin film 112 is a polyethylene vinyl acetate film, the resin film 112 may be formed of thermally crosslinkable polyethylene vinyl acetate.

## Claims

1. A laminated resin film **characterized by** at least one polyvinyl butyral film and at least one fluorine resin film which are laminated.

2. The laminated resin film according to claim 1, **characterized in that** the at least one polyvinyl butyral film has a total thickness of 0.3 mm to 2.5 mm and the at least one fluorine resin film each has a thickness of 0.05 mm to 2 mm.

3. The laminated resin film according to claim 1 or 2, **characterized in that** the at least one fluorine resin film comprises two fluorine resin films each of which constitutes one of both sides of the laminated resin film.

4. The laminated resin film according to claim 3, **characterized by** an adhesive layer formed on each surface of the two fluorine resin films.

5. The laminated resin film according to claim 4, **characterized in that** the adhesive layer comprises an adhesive containing a silane coupling agent.

6. The laminated resin film according to claim 1 or 2, **characterized in that** the at least one polyvinyl butyral film comprises two polyvinyl butyral films each of which constitutes one of both sides of the laminated resin film.

7. The laminated resin film according to claim 1 or 2, **characterized by** a fluorine resin film and a polyvinyl butyral film which are laminated.

8. The laminated resin film according to any one of claims 1 to 7, **characterized in that** the fluorine resin film comprises a tetrafluoroethylene-hexafluoropropylene-vinylidene fluoride ternary copolymer.

9. A laminated glass **characterized by** the laminated resin film according to any one of claims 1 to 8 and two glass plates respectively laminated on both sides of the laminated resin film.

10. The laminated glass according to claim 9, **characterized in that** the two glass plates are made of soda-lime glass or borosilicate glass.

11. A laminated glass comprising at least two non-tempered glass plates and at least one resin interlayer film which are bonded, the laminated glass being **characterized in that** at least one of the glass plates is a non-tempered borosilicate glass plate.

12. The laminated glass according to claim 11, **characterized in that** the resin interlayer film is a tetrafluoroethylene-hexafluoropropylene-vinylidene fluoride ternary copolymer film.

13. The laminated glass according to claim 11, **characterized in that** the resin interlayer film comprises a polyvinyl butyral film and a tetrafluoroethylene-hexafluoropropylene-vinylidene fluoride ternary copolymer film which are laminated.

14. The laminated glass according to claim 11, **characterized in that** the resin interlayer film comprises a polyethylene vinyl acetate film and a tetrafluoroethylene-hexafluoropropylene-vinylidene fluoride ternary copolymer film which are laminated.

15. The laminated glass according to claim 11, **characterized in that** the resin interlayer film is a polyvinyl butyral film.

16. The laminated glass according to claim 11, **characterized in that** the resin interlayer film is a polyethylene vinyl acetate film.

17. The laminated glass according to claim 11, wherein the resin interlayer film is subjected to flame retardant treatment.

18. The laminated glass according to claim 12, wherein the resin interlayer film is subjected to cross-linking treatment.

19. The laminated glass according to claim 13 or 15, wherein a phosphorus flame retardant is added to the polyvinyl butyral film.
